# EUROPEAN PATENT APPLICATION

(11) **EP 4 568 072 A1**
(43) Date of publication of application: **11.06.2025**
(21) Application number: 24218438.0
(22) Date of filing: 09.12.2024
(51) Int. Cl.: H02K 3/50, H02K 5/20, H02K 9/19, H02K 5/22, H02K 11/33

(54) **ELECTRIC DRIVE SYSTEM AND VEHICLE**

(30) Priority: 07.12.2023 CN 202311672194
(71) Applicant: Valeo eAutomotive Germany GmbH, 91056 Erlangen (DE)
(72) Inventor: SUN, Yawei, 91056 Erlangen (DE); JIN, Yejin, 91056 Erlangen (DE); WANG, Chris-Dongdong, 91056 Erlangen (DE); ZHAO, Wanchao, 91056 Erlangen (DE)
(74) Representative: Valeo Powertrain Systems

(57) **Abstract**

The present disclosure provides an electric drive system and a vehicle, the electric drive system comprising: a housing, which is internally provided with an electric motor, a controller and a transmission, wherein the electric motor comprises a stator and a rotor; a first electrical connector, which is arranged in the housing and is located at an outlet terminal of the stator, and is connected electrically to the controller; a second electrical connector, which is arranged in the housing and is located at the outlet terminal of the stator, and is connected electrically to the stator; and a cooling system, comprising: a cooling channel that is arranged on the housing; and a coolant distribution assembly, which is connected to the cooling channel and has at least one first hole provided thereon, so that coolant flows through the at least one first hole toward the first electrical connector, and is further provided with at least one second hole, so that coolant flows through the at least one second hole toward the second electrical connector.

## Description

### Technical field

The present disclosure relates to an electric drive system and a vehicle.

### Background art

Existing electric drive systems in automobiles are generally equipped with a dedicated cooling system for cooling an electric motor in the electric drive system. Typically, cooling systems may perform cooling using a coolant such as water or oil. In a system based on water-cooling, cooling water generally comes into contact with a housing of the electric motor, and carries away heat from the interior of the electric motor by heat transfer. In a system based on oil-cooling, cooling oil may be sprayed directly to the interior of the electric motor. In some known cooling systems, a pipeline for conveying cooling oil is generally provided, and lubricating oil may be used as the cooling oil. Specifically, in some oil-cooled systems, multiple spray pipes are provided in a housing of the electric drive system, and these pipes are arranged on an outer face of a stator and may directly spray cooling oil to the stator of the electric motor.

In various existing three-in-one electric drive systems, an electric motor, various electrical devices, such as an electric motor controller, and a gearbox are integrated into one product. An electrical connector is provided in a housing of the product to electrically connect the electric motor to the electric motor controller; the electrical connector emits heat during operation, and becomes a main heat source in the electric drive system and must be cooled as quickly as possible. However, known cooling systems are not able to directly cool the electrical connector; most of the coolant is not able to come directly into contact with the electrical connector, and therefore the cooling efficiency of the system is not high.

Thus, there is a need in the art for an electric drive system capable of solving the abovementioned problem.

### Summary of the invention

Therefore, an object of the present disclosure is to provide an electric drive system and a vehicle, wherein a cooling system of the electric drive system may supply coolant directly to an electrical connector; the cooling efficiency is high, and the system is highly integrated, structurally simple, compact and low-cost.

The abovementioned object is achieved through the electric drive system and vehicle which are described below.

The present disclosure relates to an electric drive system, the electric drive system comprising: a housing, which is internally provided with an electric motor, a controller and a transmission, wherein the electric motor comprises a stator and a rotor; a first electrical connector, which is arranged in the housing and is located at an outlet terminal of the stator, and is connected electrically to the controller; a second electrical connector, which is arranged in the housing and is located at the outlet terminal of the stator, and is connected electrically to the stator; and a cooling system, comprising: a cooling channel that is arranged on the housing; and a coolant distribution assembly, which is connected to the cooling channel and has at least one first hole provided thereon, so that coolant flows through the at least one first hole toward the first electrical connector, and is further provided with at least one second hole, so that coolant flows through the at least one second hole toward the second electrical connector. The design of the first hole and the second hole enables the present disclosure to directly cool the electrical connectors, increasing the cooling efficiency.

The electric drive system according to the present disclosure may further have one or more of the following features individually or in combination.

In an embodiment, the coolant distribution assembly comprises a protrusion that extends along a central axis of the electric motor toward the first electrical connector, and the first hole is arranged on the protrusion. By providing the protrusion, a distance between the first hole and a component requiring coolant may be reduced, so as to realize direct spraying of a fluid at a certain speed.

In an embodiment, the coolant flows out through the second hole in a direction that is perpendicular to the central axis of the electric motor. In this way, the second electrical connector may be cooled directly, without intermediate conduction, and therefore cooling is more efficient.

In an embodiment, the housing is provided with at least one guide component that extends toward a connection terminal of the first electrical connector and is used for guiding the coolant. The guide component may change the direction of flow of the coolant, and is suitable for different system structures for greater flexibility.

In an embodiment, each of the guide components is formed by a rib on the housing. This makes the system highly integrated, with a simple and compact structure.

In an embodiment, each said guide component is formed by two said ribs, and the two ribs gradually approach each other in a direction toward a corresponding connection terminal, and the ribs are arranged on an end wall of the housing. With such a converging guide component, not only can the direction of flow of the coolant be changed, but the coolant can also be guided to the corresponding connection terminals in a concentrated manner.

In an embodiment, the first hole is at a distance from a corresponding guide component, and the distance is selected such that the coolant is sprayed through the first hole onto the corresponding guide component. This allows the coolant to be sprayed at a certain speed onto the corresponding guide component, making the structure more compact.

In an embodiment, the coolant directly contacts the first electrical connector through at least one of said first hole. This makes the structure of the system simpler and more compact.

In an embodiment, the first hole corresponds to the connection terminal of the first electrical connector. In this way, the coolant may be applied to the corresponding connection terminal of the first electrical connector in a targeted manner, so that the connection terminal of the first electrical connector may be cooled directly, without the need for intermediate conduction, and therefore cooling is more efficient.

In an embodiment, a third hole is provided on the coolant distribution assembly, so that coolant flows through the third hole toward the stator. This allows the motor interior to be cooled.

The present disclosure further relates to a vehicle, the vehicle comprising the electric drive system as described above.

### Brief description of the drawings

A better understanding of the advantages and objective of the present disclosure can be gained from the preferred embodiments of the present disclosure described in detail below with reference to the drawings. To better illustrate the relationships among components in the drawings, the drawings are not drawn to scale. In the drawings:
Fig. 1 shows a schematic drawing of an electric drive system for a vehicle according to an embodiment of the present disclosure;
Fig. 2 shows a schematic drawing of the electric drive system in Fig. 1 viewed from another direction;
Fig. 3 shows a partial schematic drawing of an electric drive system according to an embodiment of the present disclosure;
Fig. 4 shows a schematic drawing of a housing of an electric drive system according to an embodiment of the present disclosure;
Fig. 5 shows a schematic drawing of a coolant distribution assembly of a cooling system of an electric drive system according to another embodiment of the present disclosure;
Fig. 6 shows a schematic drawing of the coolant distribution assembly in Fig. 5 viewed from another direction;
Fig. 7 shows a sectional schematic drawing of the coolant distribution assembly in Fig. 5;
Fig. 8 shows a schematic drawing of a coolant distribution assembly, a first connector and a second connector of an electric drive system according to another embodiment of the present disclosure; and
Fig. 9 shows a schematic drawing of the coolant distribution assembly, the first connector and the second connector in Fig. 8 viewed from another direction.

### Detailed description of embodiments

In order to clarify the objective, technical solutions and advantages of the present disclosure, the technical solutions of embodiments of the present disclosure are described clearly and completely below in conjunction with the drawings accompanying particular embodiments of the present disclosure. In the drawings, identical reference numerals denote identical components. It must be explained that the embodiments described are some, not all, of the embodiments of the present disclosure. All other embodiments obtained by those skilled in the art based on the described embodiments of the present disclosure without the need for inventive effort shall fall within the scope of protection of the present disclosure.

Unless otherwise defined, the technical or scientific terms used herein shall have the common meanings understood by those skilled in the art. The words "first", "second", and the like used in the description and claims of the patent application disclosed herein do not indicate any order, quantity or importance, being merely used to distinguish different component parts. Likewise, words such as "a" or "one" do not necessarily represent a quantity limit. Words such as "comprising", "including" or "having" mean that the element or object preceding the word covers the elements or objects and equivalents thereof listed after the word, without excluding other elements or objects. Words such as "connection" or "communication", rather than being limited to the physical or mechanical connection or communication shown in a drawing, may include connection or communication equivalent thereto, irrespective of whether it is direct or indirect. "Upper", "lower", "left", "right", etc. are only intended to indicate a relative positional relationship, and when the absolute position of a described object changes, the relative positional relationship may also change accordingly.

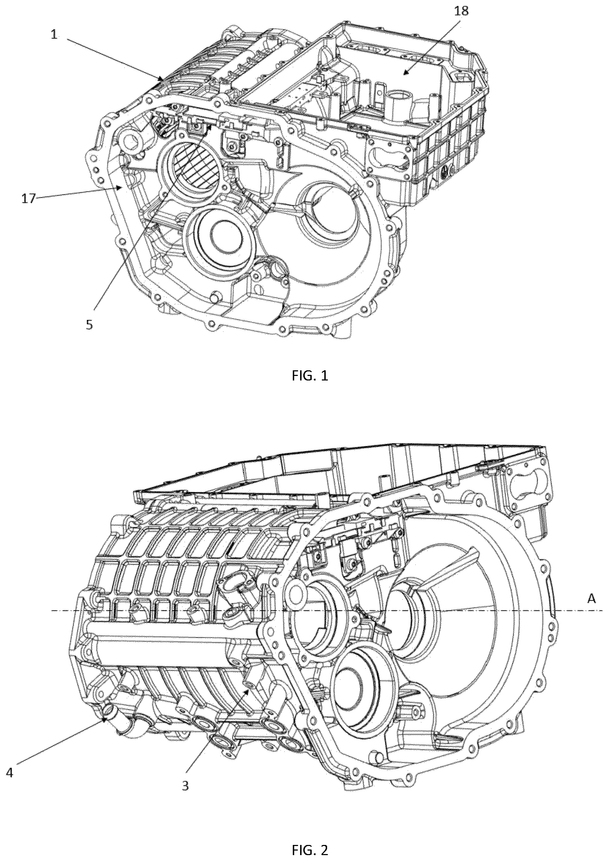

Various embodiments of the present disclosure will be described in detail below with reference to Figs. 1 to 9.

Fig. 1 shows an electric drive system for a vehicle according to an embodiment of the present disclosure, the electric drive system comprising a housing 1, wherein the housing 1 is internally provided with components such as an electric motor, a controller and a transmission. In some embodiments, the housing 1 may be one piece or may be assembled together from two or more pieces of housing components by fastening, welding or another connecting means. As shown in Fig. 1, the electric motor is arranged in a cavity defined by a main body of the housing 1, the controller is arranged in a cavity at the top of the main body of the housing 1, as indicated by 18 in the figure, and the transmission is arranged in a cavity at one end of the main body of the housing 1, as indicated by 17 in the figure. In the embodiment shown, the cavities of the housing 1 that accommodate the electric motor, the transmission and the controller are communicating. The cavity indicated by 17 in the figure may contain lubricating oil and may be closed by an additional cover. Fig. 2 shows a schematic drawing of the electric drive system in Fig. 1 viewed from another direction, and shows a central axis A of the electric motor as a dotted line, and further shows cooling channels 3, 4 arranged on the housing 1.

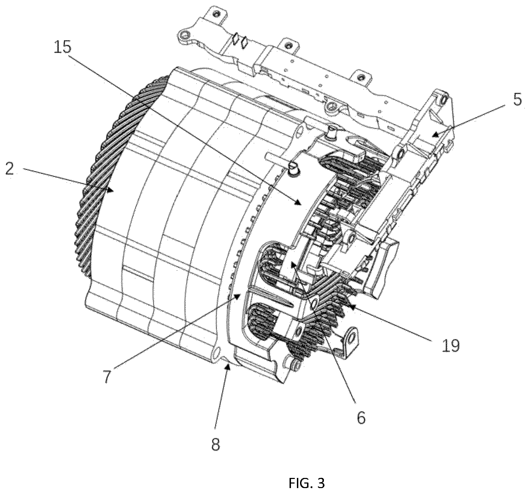

Fig. 3 shows a portion of the electric motor, the electric motor comprising a stator 2 and a rotor (not shown). The stator 2 and the rotor are both sealed in the housing 1, and the rotor is located inside the stator 2. The rotor comprises a rotary shaft capable of rotation, and a rotor core that is arranged on the rotary shaft and is composed of multiple metal laminations (e.g. silicon steel plates), and the rotary shaft extends along the central axis A as described above. The stator 2 comprises a stator core composed of multiple metal laminations (e.g. silicon steel plates) and a winding 19 arranged thereon. The stator core has a roughly cylindrical structure and accommodates the rotor. In addition, the stator comprises an outlet terminal 8 of the stator, and the winding 19 of the stator may be electrically connected to an external electrical component at the outlet terminal 8. It should be noted that Fig. 3 only schematically shows the position of the outlet terminal 8, and the actual position may deviate from the position shown in the figure. The winding 19 is able to generate a rotating magnetic field when supplied with three-phase alternating current, thereby generating electromagnetic torque which drives the rotor to rotate. The winding 19 may be embedded in a slot of the stator according to a certain pattern and forms a bun part at an end part of the stator. In addition, in some examples, the electric motor of the present disclosure may further comprise a pump, not shown here, which is used, for example, to pump lubricating oil from the transmission to a cooling system of the electric drive system to act as a coolant. Referring to Fig. 3 again, the electric drive system further comprises a first electrical connector 5, a second electrical connector 6 and the cooling system. The first electrical connector 5 is arranged in the housing 1 and is located at the outlet terminal 8 of the stator, and is connected electrically to the controller. The first electrical connector 5, also called an AC busbar, may be electrically connected to the controller, such as an inverter. Returning to Fig. 1, the first electrical connector 5 may extend from the cavity indicated by 17 to the cavity indicated by 18. The second electrical connector 6 is arranged in the housing 1 and is located at the outlet terminal 8 of the stator, and is connected electrically to the stator 2. The second electrical connector 6 may also be called a stator busbar or a winding busbar. The cooling system comprises the cooling channels 3, 4 arranged on the housing 1, as described above, and a coolant distribution assembly 7.

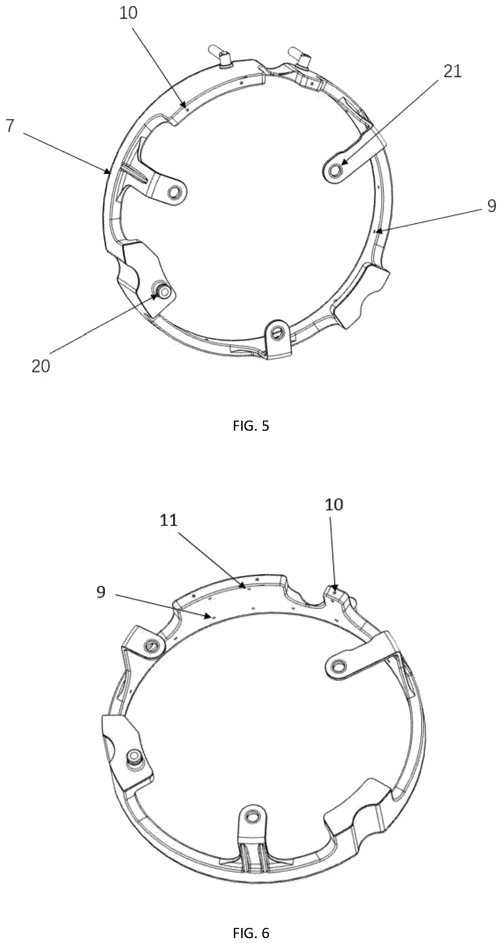

Figs. 5 to 9 show the specific structure of the coolant distribution assembly 7. The coolant distribution assembly 7 may be a ring-shaped structure, and, if the coolant is oil, may also be called an oil ring. The coolant distribution assembly 7 may have an internally hollow main body which forms a chamber containing the coolant. The main body of the coolant distribution assembly 7 is provided with a mounting part that extends radially toward the central axis A, and a mounting hole 21 is provided on the mounting part. The coolant distribution assembly 7 may be fixed onto the housing 1 by passing a fastener, such as a screw, through the mounting hole 21. Multiple mounting parts may be evenly distributed on the circumference of the coolant distribution assembly 7. In addition, the coolant distribution assembly 7 is provided with a coolant inlet 20, which is connected to the cooling channel 3 on the housing 1. That is, the coolant distribution assembly 7 may be connected to the cooling channel 3 to receive coolant from the cooling channel 3. As shown in the respective figures, at least one first hole 10 and at least one second hole 11 are provided on the coolant distribution assembly 7, acting as coolant outlets, and these outlets are arranged on the main body of the coolant distribution assembly 7 and have openings facing in different directions. The at least one first hole 10 allows coolant to flow through the at least one first hole 10 toward the first electrical connector 5. The at least one second hole 11 allows coolant to flow through the at least one second hole 11 toward the second electrical connector 6. In addition, at least one third hole 9 is further provided on the coolant distribution assembly 7, and the third hole 9 allows coolant to flow through the third hole 9 toward the stator 2. The third hole 9 may be distributed on the circumference of the coolant distribution assembly 7. The design of the three different types of hole mentioned above enables the coolant distribution assembly 7 of the present disclosure to directly cool the interior of the electric motor and electrical connectors, increasing the cooling efficiency.

Specifically, as shown in Fig. 3, the coolant distribution assembly 7 comprises a protrusion 15 that extends along the central axis A of the electric motor toward the first electrical connector 5. As shown in Figs. 5 and 6, the first hole 10 is arranged on the protrusion 15. The protrusion 15 may have a recessed section to stay clear of the housing 1 or a structure in the housing 1. By providing the protrusion, a distance between the first hole and a component requiring coolant may be reduced, so as to realize direct spraying of a fluid at a certain speed.

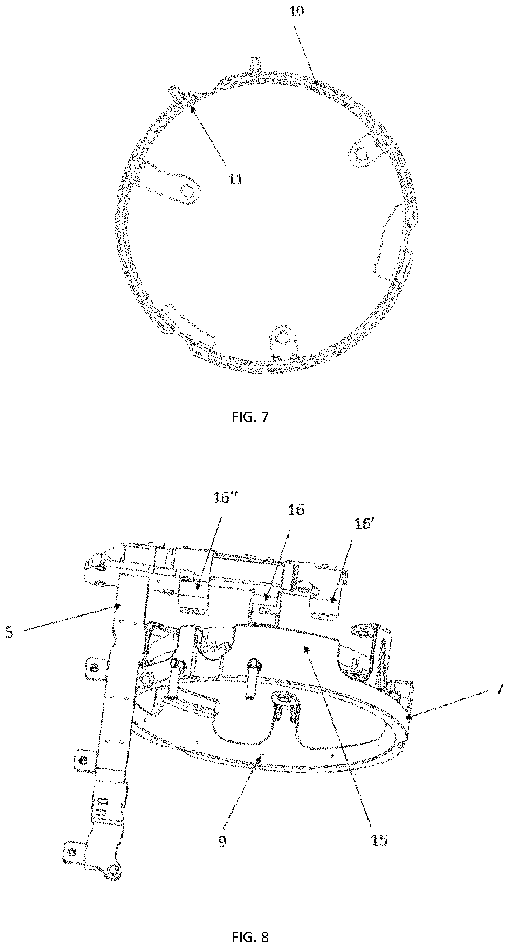

As shown in Figs. 5 and 8, the first holes 10 respectively correspond to connection terminals 16, 16', 16" of the first electrical connector 5. The three connection terminals 16, 16', 16" are respectively three-phase connection terminals, i.e. a U-phase connection terminal, a V-phase connection terminal and a W-phase connection terminal. Thus, three first holes 10 may be provided. However, other numbers of first holes are also possible, such as one or two. The first hole 10 allows the coolant to be sprayed to the corresponding connection terminal. In this way, the coolant may be applied to the corresponding connection terminal of the first electrical connector in a targeted manner, so that the connection terminal of the first electrical connector may be cooled directly, without the need for intermediate conduction, and therefore cooling is more efficient.

In addition, as shown in Figs. 6 and 7, the second hole 11 may also be arranged on the protrusion 15. Coolant flows out through the second hole 11 in a direction that is perpendicular to the central axis A of the electric motor. Specifically, the opening of the second hole 11 faces downward. The position of the second hole 11 corresponds to the second electrical connector 6, so that coolant is sprayed directly onto the second electrical connector 6 through the second hole 11. Three second holes 11 are shown in Fig. 6, which is only illustrative, and other quantities are also possible, such as one or two. For example, according to cooling requirements, more second holes 11 may be provided. In this way, the second electrical connector may be cooled directly, without intermediate conduction, and therefore cooling is more efficient.

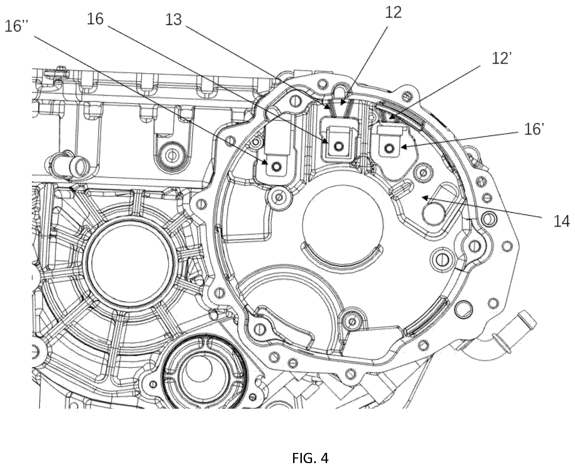

As shown in Fig. 4, the housing 1 is provided with at least one guide component 12, 12' that extends toward a connection terminal of the first electrical connector 5 and is used for guiding the coolant. Specifically, the guide component 12 extends toward the connection terminal 16 of the first electrical connector 5, and the guide component 12' extends toward the connection terminal 16' of the first electrical connector 5. In addition, the coolant may come directly into contact with the first electrical connector 5 through at least one of the first holes 10. Specifically, for the connection terminal 16" of the first electrical connector 5, coolant may be sprayed directly to the connection terminal 16" of the first electrical connector 5 through the first hole 10. The guide component may change the direction of flow of the coolant, and is suitable for different system structures for greater flexibility.

For example, each of the guide components 12, 12' is formed by a rib 13 on the housing 1. The rib 13 may be formed integrally with the housing 1. Each said guide component 12, 12' is formed by two said ribs 13 and the two ribs 13 gradually approach each other in a direction toward the corresponding connection terminal 16, 16', and specifically form a guide channel or guide passage that gradually converges toward the corresponding connection terminal 16, 16'. Specifically, the two ribs 13 gradually approach each other in the downward vertical direction in Fig. 4. The ribs 13 may be arranged on an end wall 14 of the housing 1.

Coolant flows out of the first hole 10 in a direction parallel to the central axis A and then directly contacts the guide component 12, 12', and the guide components then change the direction of the coolant and guide the coolant to the connection terminals of the first electrical connector 5. As a result of forming a guide component with ribs formed on the housing, the system is more integrated, and the structure is made simple and compact. With such a converging guide component, not only can the direction of flow of the coolant be changed, but the coolant can also be guided to the corresponding connection terminals in a concentrated manner.

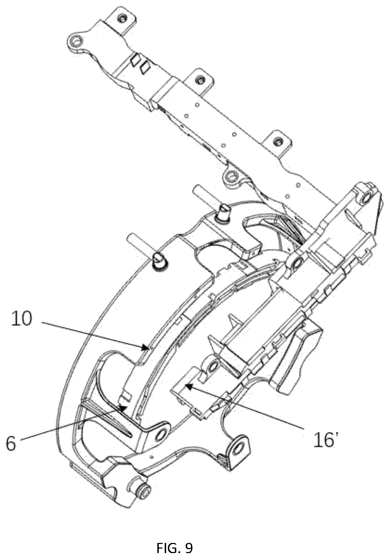

In view of Figs. 3 and 9, it can be seen that, along the central axis A, the first hole 10 is at a distance from the corresponding guide component 12, and the distance is selected such that the coolant is sprayed through the first hole 10 onto the corresponding guide component 12, 12', in particular at a certain speed. This makes the structure more compact.

In addition, in some examples, a coolant spray flow rate at each of the first hole 10, the second hole 11 and the third hole 9 is 1.3 m/s. The diameter of each of the first hole 10, the second hole 11 and the third hole 9 may be 1.5 to 2.5 mm. The distance between the first hole 10 and the corresponding guide component 12 is for example 15 to 30 mm. Through simulation experiments, it can be seen that the abovementioned specific structures greatly improve the cooling efficiency of the electric drive system, and the system is more integrated, and the structure is simpler and more compact.

A fitted cooling system of the electric drive system described above may supply coolant directly to an electrical connector; the cooling efficiency is high, and the system is highly integrated, structurally simple, compact and low-cost.

A vehicle of the present disclosure comprises the electric drive system described above. The vehicle may be an electrified vehicle, for example, a battery electric vehicle (BEV), a hybrid electric vehicle (HEV), a plug-in hybrid electric vehicle (PHEV), a range-extended EV or a fuel cell electric vehicle (FCEV). The vehicle may also be a hydrogen-powered vehicle. It should be understood that the vehicle of the present disclosure also has the advantages described above in relation to the electric drive system.

In addition, the technical features disclosed above are not limited to combinations of the disclosed features with other features, and those skilled in the art could combine technical features in other ways according to the objective of the invention, to realize the objective of the present disclosure.

## Claims

1. An electric drive system, **characterized in that** the electric drive system comprises:
a housing (1), in which an electric motor, a controller and a transmission are arranged, the electric motor comprising a stator (2) and a rotor;
a first electrical connector (5), which is arranged in the housing (1) and is located at an outlet terminal (8) of the stator, and is electrically connected to the controller;
a second electrical connector (6), which is arranged in the housing (1) and is located at the outlet terminal (8) of the stator, and is electrically connected to the stator (2); and
a cooling system, comprising:
a cooling channel (3) that is arranged on the housing (1); and
a coolant distribution assembly (7), which is connected to the cooling channel (3) and comprises at least one first hole (10) provided thereon, so that coolant flows through the at least one first hole toward the first electrical connector (5), and is further provided with at least one second hole (11), so that coolant flows through the at least one second hole toward the second electrical connector (6).

2. The electric drive system according to claim 1, **characterized in that** the coolant distribution assembly (7) comprises a protrusion (15) that extends along a central axis (A) of the electric motor toward the first electrical connector (5), and the first hole (10) is arranged on the protrusion (15).

3. The electric drive system according to claim 1 or 2, **characterized in that** the coolant flows out through the second hole (11) in a direction that is perpendicular to the central axis (A) of the electric motor.

4. The electric drive system according to one of the preceding claims, **characterized in that** the housing (1) is provided with at least one guide component (12, 12') that extends toward a connection terminal of the first electrical connector (5) and is used for guiding the coolant.

5. The electric drive system according to claim 4, **characterized in that** each of the guide component (12, 12') is formed by a rib (13) on the housing (1).

6. The electric drive system according to claim 5, **characterized in that** each of the guide component (12, 12') is formed by two ribs (13), and the two ribs (13) gradually approach each other in a direction toward a corresponding connection terminal, and the ribs (13) are arranged on an end wall (14) of the housing (1).

7. The electric drive system according to one of the claims 4 to 6, **characterized in that** the first hole (10) is at a distance from the corresponding guide component (12, 12'), and the distance is selected so that the coolant is sprayed onto the corresponding guide component (12, 12') through the first hole (10).

8. The electric drive system according to one of the preceding claims, **characterized in that** the coolant directly contacts the first electrical connector (5) through at least one of said first hole (10).

9. The electric drive system according to one of the preceding claims, **characterized in that** the first hole (10) corresponds to the connection terminal (16, 16', 16") of the first electrical connector (5).

10. The electric drive system according to one of the preceding claims, **characterized in that** the coolant distribution assembly (7) is provided with a third hole (9), so that coolant flows through the third hole toward the stator (2).

11. A vehicle, **characterized in that** the vehicle comprises the electric drive system according to any one of claims 1 to 10.
